# EUROPEAN PATENT SPECIFICATION

(11) **EP 1 913 805 B1**
(45) Date of publication and mention of the grant of the patent: **21.07.2010**
(21) Application number: 06425720.7
(22) Date of filing: 19.10.2006
(51) Int. Cl.: A01D 46/26

(54) **Shaking device for harvesting fruits such as olives and the like**
Schüttelvorrichtung für das Ernten von Früchten wie Oliven und dergleichen
Appareil de secouage pour la récolte de fruits tels que les olives et d'autres fruits semblables

(43) Date of publication of application: 23.04.2008
(73) Proprietor: Cecchi, Marco, 71100 Foggia (IT); Cecchi, Daniela, 71100 Foggia (IT); Cecchi, Sabrina, 71100 Foggia FG (IT)
(72) Inventor: Cecchi, Marco, 71100 Foggia (IT); Cecchi, Daniela, 71100 Foggia (IT); Cecchi, Sabrina, 71100 Foggia FG (IT)
(74) Representative: Papa, Elisabetta

(56) References cited:
- EP-A- 0 703 023
- EP-A- 1 654 922
- EP-A- 1 671 531

## Description

The present invention refers to an improved shaking device for harvesting fruits such as olives and the like from branches of the producing plants.

This typology of machine finds application in agriculture, generally in all those crops entailing a step of harvesting with the detachment of fruits from the thick of the foliage of the producing plants, and particularly in the olive-growing field.

The ever more pressing need to reconcile higher productivity with reduced harvesting times, as well as the shortage of labour traditionally employed in the manual stripping, have brought about the progressive mechanization of the harvesting processes of fruits such as olives, hazelnuts and the like and the abandoning of the customary beating with poles.

Mechanical harvesting devices are known which are apt to spare agricultural operators a demanding energy expenditure and an overly slow progress in carrying out the fruit-detaching steps.

According to the typology of the machines employed in the known art, the modes with which the detachment of the fruits from the peduncle is attained vary.

Presently, there are used "tearing" harvesting means, such as the combs, operating directly on the fruit, or "percussion" harvesting machines, e.g. of the hydraulic type, which transfer vibrations onto the trunk or the individual branches, applying stresses that cause fruits to detach from the peduncle owing to the shaking sustained.

However, such machineries entail the drawback of being scarcely productive, incompletely harvesting the quantity of fruits available on the branches. Moreover, they are potentially harmful to the integrity of the foliage, of the trunks and of the roots of the producing plants.

Shaking devices of modem conception are commercially available as well, which act on the branches and are set as an alternative to said harvesting modes, using rotating arms that, besides shaking the foliage, have a combined racking/beating effect. An improved version of such a device is disclosed in EP 1 654 922, to the same applicants.

However, a problem that may occur with such rotating-arm systems is that they, though moving the foliage and branches, are anyhow unable to produce the detachment of fruits. In particular, shaking elements, with their rotary motion, tend to push the thinner and therefore more flexible branches out of their range. Accordingly, the shaking action on these branches is carried out for a time interval shorter than necessary; therefore, a fraction of the available fruits tends to remain on said branches.

Hence, the technical problem underlying the present invention is to provide a shaking device apt to overcome the drawbacks hereto-mentioned with reference to the known art.

Such a problem is solved by a shaking device for harvesting fruits such as olives and the like from plants according to claim 1 and by an accessory for an existing device according to claim 22.

Preferred features of the invention are provided in the dependent claims thereof.

The main advantage of the present invention is that, thanks to the grid structure circumscribed to the shaking elements, those branches that in the preceding embodiments would have been pushed out of the range of the shaking elements themselves, here instead are held by said grid, allowing the shaking action to be carried out for an adequate time interval even on said branches, thereby harvesting the available fruits thereof.

Advantageously, the shaking device according to the present invention further allows, by virtue of its increased effectiveness, the abatement of the times and concomitantly of the costs for harvesting.

In addition, it allows to attain a quality product concomitantly respecting the integrity of the plants, given the non-traumatic harvesting modes. In fact, by virtue of the use of the shaking device according to the present invention, the effects injurious to the foliage and the fruits of the producing plants and the falling of twigs are anyhow minimized.

A further advantage of the shaking device according to the present invention lies in that it integrates sturdiness, lightness and manoeuvrability.

Further advantages, features and the modes of employ of the present invention will be made apparent in the following detailed description of a preferred embodiment thereof, given by way of a non-limiting example.

Reference will be made to the figures of the annexed drawings, wherein:
- Figure 1 is a partially sectional side view of a preferred embodiment of a shaking device according to the present invention;
- Figure 1A shows a variant of the device of Figure 1 in which a grid system according to the invention is applied to an existing shaking device
- Figure 2 is a front view of the shaking device of Figure 1;
- Figure 3 is a rear view of the shaking device of Figure 1;
- Figure 4A is an elevational side perspective view illustrating the connection of a telescopic extension rod to a variable-tilt mount of the shaking device of Figure 1;
- Figure 4B is an elevational side perspective view depicting the shaking device of Figure 1 mounted onto the extension rod of Figure 4A and connected to a portable rechargeable power unit;
- Figure 5 illustrates an operator using the shaking device of Figure 1, in the configuration of Figure 4B, on a plant;
- Figures 6A and 6B show a front perspective view and a side view, respectively, of a second preferred embodiment of the invention.

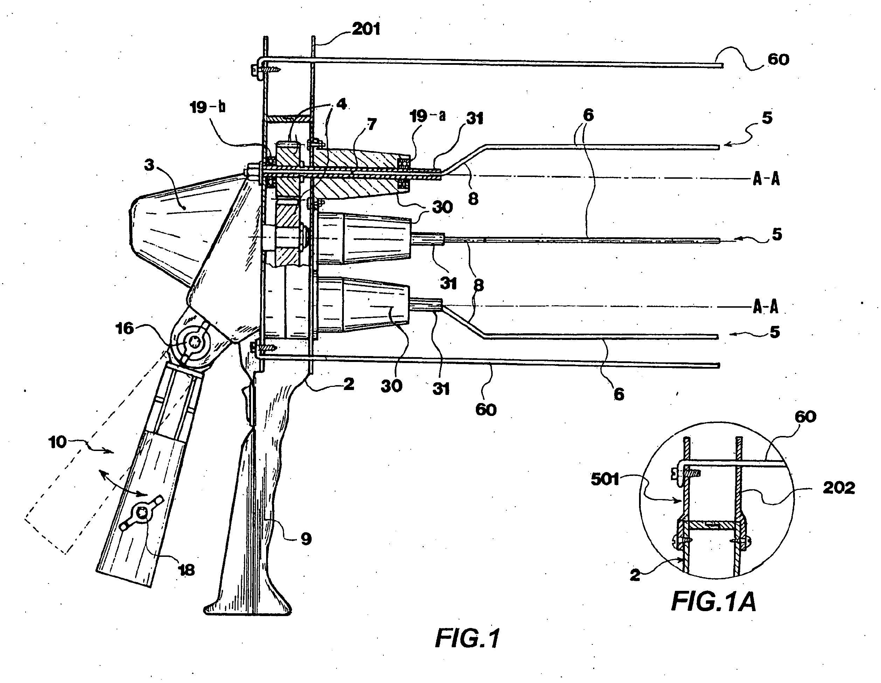

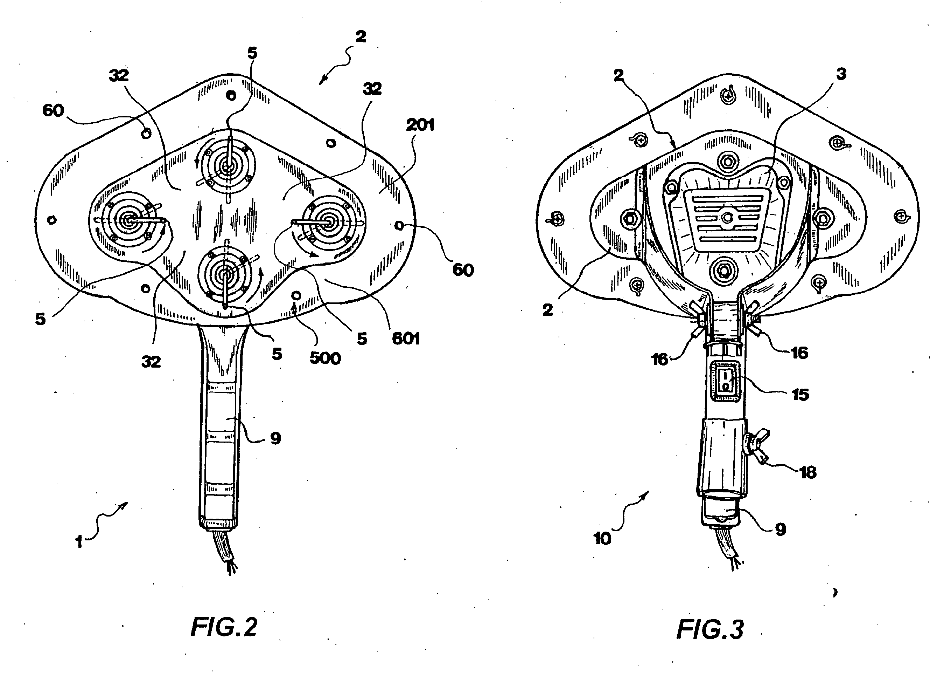

With reference to Figures 1 to 3, hereinafter it will be described a shaking device, generally indicated by 1, for harvesting fruits such as olives, hazelnuts and the like from the producing plants according to a preferred embodiment of the invention.

The shaking device 1 has a main body comprising a rear cover 3, inside which it is housed rotating driving means, preferably electrical, apt to develop a rotary motion, and a front case 2. Inside the latter it is housed means 4 for transmitting the rotary motion generated by the driving means to shaking elements 5 frontally projecting from the case 2 itself.

Said shaking elements 5 are substantially rod-shaped and rotate about respective axes of rotation A-A substantially parallel therebetween.

Each of the shaking elements 5 comprises a respective front effective shaking portion 6, eccentric with respect to the axis of rotation A-A, and an actuating portion 7, integral to the shaking portion 6 and cooperating with the transmission means 4, which is substantially aligned to said axis A-A.

The two portions 6 and 7 are connected by a tilted rigid connecting section 8, integral therewith. In the specific case, such a rigid connecting section 8 between the actuating portion 7 and the effective shaking portion 6 is represented by an oblique elbow.

In the embodiment described herein the motion transmission means is implemented by gears, them also indicated by 4, each of which, as mentioned above, cooperates with the actuating portion 7 of a respective shaking element 5 so as to drag it in rotation.

More specifically, the combination of said gears 4 forms a train of toothed gears that are inputted, via a shaft, the rotary motion generated by the driving means, e.g. by an electric motor, and mesh so as to synchronize the rotation of the shaking elements 5.

The engineering of said wheelwork, via the implementation of suitable clutches of said gears 4, could provide the option of selectively inducing, according to contingent needs, a rotation of said shaking elements 5 in a concordant or mutually discordant sense.

Moreover, a variant embodiment provides that the shaking elements 5 may be selectively activated individually or in sets by the operator, and therefore not necessarily all concomitantly set in rotation.

In addition, the shaking device 1 may be equipped with means for adjusting the speed of rotation of the shaking elements 5 so that the operator may selectively set a given speed for all or each of the shaking elements 5, for example with a speed commutator whose functionalities can be activated by acting on a multiposition switch.

Onto the main body of the shaking device 1 it is obtained a handgrip 9, preferably ergonomic, for the direct control of the shaking device 1 by the operator, and optionally for carrying out a shaking from a position close to the producing plant.

The driving means is operable by means of a conventional switch 15, optionally of the kind that has to be held pressed for a continual operation of the means itself.

According to the invention, the shaking device 1 comprises stiffening means of the shaking elements 5, arranged at the actuating portion 7 thereof.

In the present embodiment, such stiffening means comprises, for each actuating portion 7 of the shaking elements 5, a first stiffening element 30 fixed with the case 2 and a second stiffening element 31 rotatable integrally to the actuating portion 7 itself. Both said elements are circumscribed to the respective actuating portion 7, and the second element 31 is arranged internally to the first element 30.

In particular, the first stiffening elements consist in sleeves 30, projecting from the case 2 of the main body and made fixed therewith, e.g., by conventional disassemblable connecting means.

In the present embodiment, the sleeves 30 are substantially frustoconical bodies and extend for nearly the entire length of the respective actuating portions 7 projecting from the case 2. Of course, variant embodiments could provide a different configuration of said sleeves 30, which could also be, e.g., cylindrical.

The second stiffening elements 31 consist in tubular elements, each wrapping and fixed to a respective actuating portion 7.

In this case, it is the tubular elements 31 themselves that are brought in rotation by a relevant gear 4 engaged thereon, dragging the respective actuating portions 7.

In the preferred embodiment of the shaking device 1 considered hereto, an additional stiffening action is carried out, for each shaking element 5, by a pair of bearings 19A and 19B apt to rotatably connect the relevant actuating portion 7 or the respective element 31 to the case 2 of the main body.

In particular, the bearings 19A and 19B are arranged each at or near to a respective end of said actuating portion 7 or of the respective element 31.

In the present embodiment, the bearings 19A have an external ring fixed with the case 2 and an internal ring fixed with the elements 31.

In the same way, the sleeves 30 engage, by resting onto the external ring of the bearings 19A, about a respective tubular element 31.

The bearings 19B, internal to the case 2, may be of the axial kind and have an external ring fixed to the case 2 and an internal ring fixed to the respective element 31.

It will now be better understood that by virtue of the action of stiffening and of structural tightness exerted by said stiffening means and by possible combinations thereof, it becomes possible to increase the length of the actuating portions 7 of the shaking elements 5 with respect to the other known devices. In particular, it is possible to adopt a constructive mode in which the part of the actuating portions 7 of the shaking elements 5 projecting from the case 2 of the machine (rigid connecting sections 8 included) is characterized by a greater length, with respect to that generally allowed for structural reasons in the other known machines. Accordingly, the overall length of the shaking elements 5 is increased with respect to the latter. There ensues an increase of the penetration depth of the respective effective shaking portions 6.

With regard to the embodiment given here by way of example and depicted in Figures 1 to 3, the shaking device 1 according to the present invention comprises four shaking elements 5, each of which is arranged at a respective vertex of a quadrilateral.

Hence, the actuating portions 7, and accordingly the elements 30 and 31 circumscribed thereto, are arranged so as to define a central housing room 32 apt to house the branches already shaken, further assisting the capability of the shaking elements 5 to penetrate in-depth the foliage of the producing plants.

Said frustoconical configuration of the sleeves 30 fosters the housing of the branches already shaken in said housing room 32, since the taper constitutes a raiser for the sliding and the allocation of said branches.

According to the invention, the device 1 further comprises a stationary grid structure 500, at least partially circumscribed to the rotatable shaking elements 5. In the present embodiment, such a grid structure 500 has a plurality of rod-like elements, each denoted by 60, projecting from the front portion of the case 2 and fixed therewith.

In particular, in the embodiment considered herein, the rod-like elements 60 are located in the peripheral zone of the front case 2, at a flange or peripheral frame 201 of the latter of double-plate type. The elements 60 completely circumscribe the shaking elements 5 so that between the later and the elements 60 there remains defined a region 601 for holding the twigs and the foliage.

In the present instance, each element 60 has a development substantially rectilinear and substantially parallel to the axes of rotation A-A.

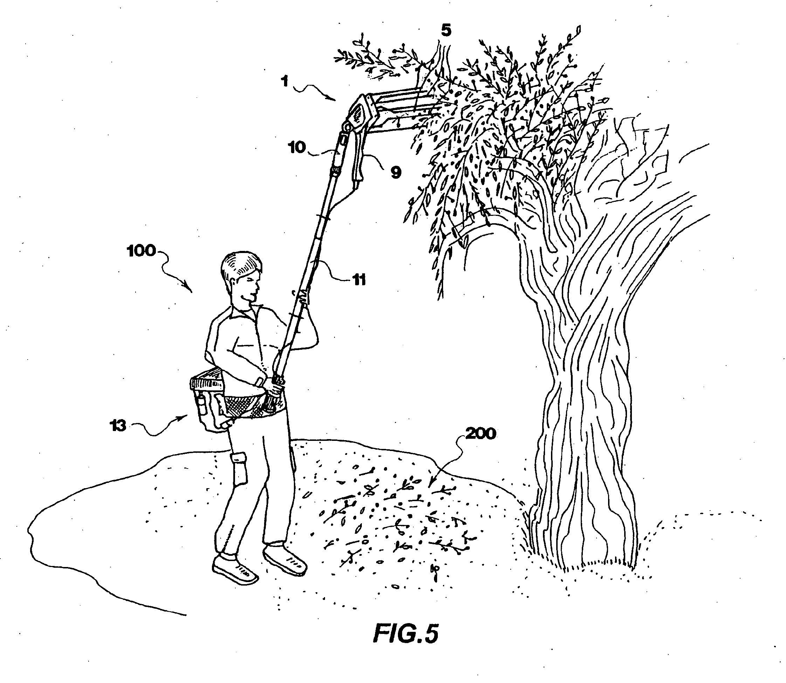

With reference also to Figure 5, the shaking elements 5, by describing circumferences about a respective axis A-A in their rotation, produce a combined effect causing the falling of the fruits 200 from the foliage, for example on a system of nets prearranged beforehand onto the ground about the producing plants.

As mentioned above, the grid structure 500 is apt to hold branches that tend to be moved away by the action of the shaking elements 5. The distance between each rod-like element 60 and the region swept by the shaking elements 5, i.e. the extension of said holding region 601, is such as to allow an effective shaking of the branches, without however having the same running the risk of being broken off or damaged by the combined action of the elements 5 and 60.

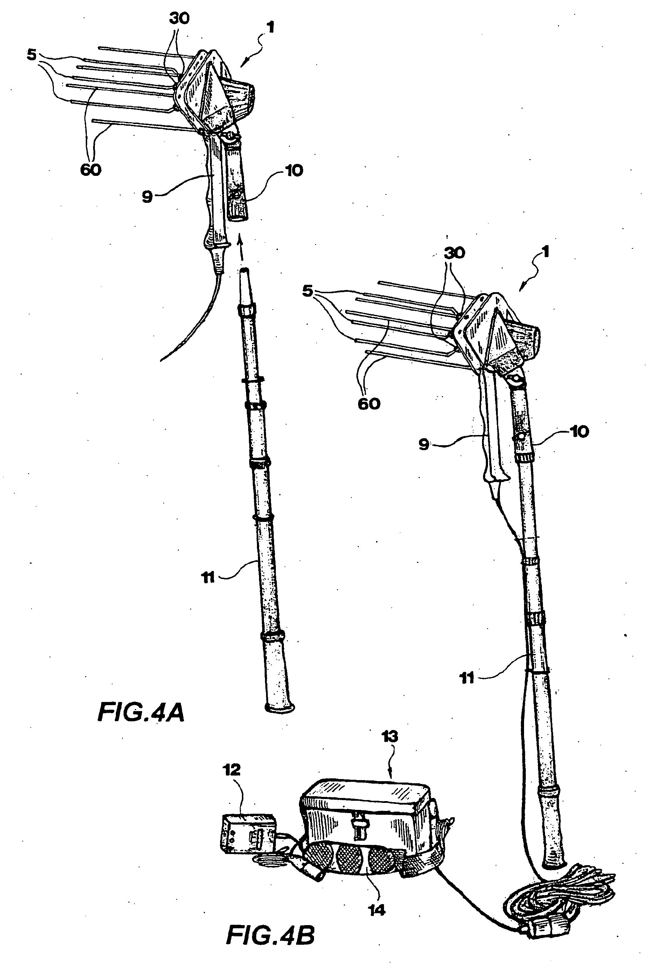

For an improved manoeuvrability of the shaking device 1 even from a non-close position, onto the main body of the shaking device 1 it is preferably obtained connecting means 10 for the connection to an extension rod shown in Figures 4A and 4B and indicated by 11.

Preferably, said connecting means 10 has a variable tilt and, in the specific embodiment of the shaking device 1 depicted in the figures, it comprises a hollow mount, or coupling, apt to receive one end of said extension rod 11.

The hollow mount is equipped with means 16 for the rapid adjustment of the tilt, for example of the screw lock kind.

The connection of the extension rod 11 to the mount 10 is preferably rigid and for example implemented via a rapid tightening device 18.

According to a preferred embodiment and with reference to Figures 4A and 4B, the rod 11 is tubular and telescopic, thereby allowing a ready adjustment with regard to the height of the plant being harvested.

Said driving means is powered by a power unit 13, for example of the dry type, preferably rechargeable via a suitable recharger 12 and relevant means for connecting to the supply mains; such a unit is shown in Figure 4B.

With reference to Figures 4B and 5, in view of the need for a wide margin of manoeuvre onto the working ground for the shaking device 1, preferably said power unit 13 is portable and it can be housed in a bag. The operator, indicated by 100 in Figure 5, may wear on said bag, for example securing it round the waist by virtue of an adjustable belt 140 or to the back via suitable shoulder straps.

As it is shown in figure 1A, object of the invention is also an accessory device 501 apt to be applied peripherally to existing rotating-arm shaking devices and bearing a grid structure of the abovedescribed type. In particular, the grid structure of the device 501 provides a plurality of rod-like elements analogous to those already described and denoted here as well with 60, which are fastened on a double-plate type frame 202.

The fastening of the accessory device 501 to the case 2 is obtained with suitable retaining systems, e.g. with grommets and hooks or by conventional-type bolts, nails or screws.

It will be understood that the present invention is susceptible of several embodiments alternative to the hereto-described one, some of which will briefly be illustrated hereinafter with reference to the sole aspects differentiating them from the hereto-considered first embodiment.

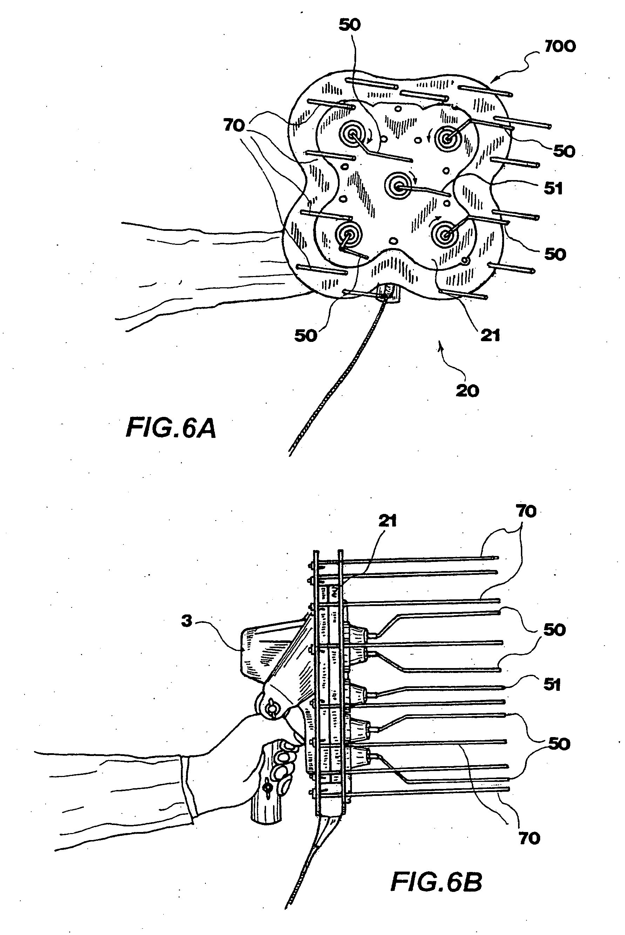

With reference to Figures 6A and 6B, a shaking device according to another preferred embodiment of the invention is generally indicated by 20. The device 20 comprises a main body formed in this case as well by a rear cover 3, inside which there is housed rotating driving means analogous to the hereto-described ones, and by a front case, in this case indicated by 21, which is shaped in a manner such as to receive five shaking elements. Four of the latter, indicated by 50, are arranged at the vertexes of a quadrilateral, whereas the fifth element, indicated by 51, is arranged in a position substantially centred with respect to the formers. The overall arrangement of the device 20 is such that pairs of adjacent shaking elements 50 rotate in the opposite sense, as exemplarily indicated by the arrows of Figure 6A. Moreover, the central shaking element 51 rotates at a speed substantially lower with respect to the lateral elements 50.

The hereto-described arrangement and configuration cause the shaking element 51 to act as conveying element, i.e. to convey by its rotary motion the branches and twigs toward the lateral elements 50. Then, the latter act as the actual beating or shaking elements.

On the periphery of the front case 21 it is engaged a certain number of rod-like elements, in this case denoted by 70, forming a branch-holding grid 700 analogous to that already described with reference to the first embodiment.

Of course, in this case as well the grid structure could be applicable later on to an already existing device.

Variant embodiments may envisage a different number and configuration of the two kinds of shaking elements mentioned above, as well as they may envisage a different number and configuration of the rod-like elements forming the grid.

In particular, for instance it is possible to provide plural concentric rings of elements, e.g. adding an external ring of conveying elements and a further ring, circumscribed thereto, of beating elements, and so on, to said basic five-element configuration.

Moreover, it is also possible to arrange the conveying element or elements externally to the beating ones.

Such an association of one or more shaking conveying elements with one or more beating elements circumscribed to or inscribed in the former makes fruit harvesting less traumatic for all plant components, concomitantly ensuring a high productivity of the harvesting process and reduced times for its completion.

In particular, it will be appreciated that, by virtue of the limited number of revolutions of the conveying element or elements with respect to the beating ones, the branches and twigs are gently conveyed toward the actual shaking elements, reducing the risk of breaking said branches and twigs, knocking leaves down and/or damaging the fruits.

These advantages are important also because the described variant embodiment greatly reduces the risk of falling of the so-called "olive-blossom" or "eyespots", i.e. the bud for the production of the years to come.

Moreover, the above-described stationary holding grid structure may also provide the arrangement of one or more transversal elements interposed between the longitudinal rod-like elements.

To the abovedescribed shaking device for harvesting fruits from producing plants a person skilled in the art, in order to satisfy further and contingent needs, may effect several further modifications and variants, all however falling within the protective scope of the present invention, as defined by the appended claims.

## Claims

1. A shaking device (1; 20) for harvesting fruits (200) such as olives, hazelnuts and the like from the relevant plants, comprising:
- a main body (2, 3; 21, 3);
- a plurality of shaking elements (5; 50, 51) projecting from said main body (2, 3; 21, 3), said shaking elements (5; 50, 51) being substantially rod-shaped and rotatable about respective axes of rotation (A-A) substantially parallel therebetween by action of driving means;
**characterised in that** it also comprises
- a grid structure (500), integral to said main body (2) and circumscribed to said shaking elements (5; 50, 51) so as to define jointly with the latter a region (601) for holding the fruit-bearing twigs and foliage.

2. The device (1; 20) according to claim 1, wherein said grid structure (500) is arranged at a peripheral frame (201) of said main body (2).

3. The device (1; 20) according to claim 1 or 2, wherein said grid structure (500) comprises a plurality of longitudinal rod-like elements (60) substantially parallel to said axes of rotation (A-A).

4. The device (1; 20) according to the preceding claim, wherein said grid structure (500) comprises one or more transversal elements interposed between said rod-like elements (60).

5. The device (1; 20) according to any one of the preceding claims, wherein each of said shaking elements (5; 50, 51) in turn has:
» an effective shaking portion (6), substantially eccentric with respect to the respective axis of rotation (A-A); and
» an actuating portion (7) that can be actuated by the driving means, which is substantially centred with respect to said respective axis of rotation (A-A) and is apt to increase the penetration depth of the shaking element (5) itself,
said device (1) further comprising stiffening means (30, 31, 19A, 19B) arranged at said actuating portion (7) of each shaking element (5) and apt to prevent elastic deformations of said shaking elements (5) during their rotary motion.

6. The device (1; 20) according to the preceding claim, wherein said stiffening means comprises, for each actuating portion (7) of said shaking elements (5; 50, 51), at least one stiffening element (30, 31) circumscribed thereto.

7. The device (1; 20) according to claim 5 or 6, wherein said stiffening means comprises, for each actuating portion (7) of said shaking elements (5; 50, 51), at least one stiffening element (30) fixed with said main body (2, 3; 21, 3).

8. The device (1; 20) according to the preceding claim, wherein said stiffening element comprises a sleeve (30) projecting from said main body (2, 3; 21, 3).

9. The device (1; 20) according to the preceding claim, wherein said sleeve (30) is substantially cylindrical.

10. The device (1; 20) according to claim 8, wherein said sleeve (30) is substantially frustoconical.

11. The device (1; 20) according to any one of the claims 5 to 10, wherein said stiffening means comprises, for each actuating portion (7) of said shaking elements (5; 50, 51), at least one stiffening element (31) rotatable integrally to the actuating portion (7) itself.

12. The device (1; 20) according to the preceding claim and according to any one of the claims 7 to 10, wherein said stiffening means comprises, for each actuating portion (7) of said shaking elements (5; 50, 51), at least one first stiffening element (30) fixed with said main body (2, 3; 21, 3) and at least one second stiffening element (31) rotatable integrally to the actuating portion (7) itself, said first element (30) being circumscribed to said second element (31).

13. The device (1; 20) according to claim 11 or 12, wherein said rotatable stiffening element comprises a tubular sleeve (31) wrapping the respective actuating portion (7).

14. The device (1; 20) according to any one of the claims 5 to 13, wherein said actuating portions (7) are arranged so as to define a housing room (32) for the branches already shaken.

15. The device (1; 20) according to any one of the claims 5 to 14, wherein said stiffening means comprises, for each shaking element (5; 50, 51), a pair of bearings (19A, 19B) rotatably connecting each of said actuating portions (7) to said main body (2, 3; 21, 3), arranged each substantially at a respective end of said actuating portion (7).

16. The device (1; 20) according to any one of the preceding claims, wherein the overall arrangement is such that said shaking elements (5) are apt to rotate in a concordant sense.

17. The device (1; 20) according to any one of the preceding claims, wherein the overall arrangement is such that said shaking elements (5) are apt to rotate in a mutually discordant sense.

18. The device (1; 20) according to any one of the preceding claims, comprising means for adjusting the speed of rotation of said shaking elements (5; 50, 51).

19. The device (20) according to any one of the preceding claims, wherein said plurality of shaking elements comprises at least one conveying element (51) and at least one beating element (50), the former having a speed of rotation lower than the latter, so that said conveying element (51) be apt to convey the fruit-bearing foliage toward said beating element (50).

20. The device (20) according to the preceding claim, comprising a plurality of beating elements (50) circumscribed to said at least one conveying element (51).

21. The device (20) according to claim 19, comprising a plurality of conveying elements (51) circumscribed to said at least one beating element (50).

22. An accessory device (501) apt to be fastened to a shaking device (1; 20) for harvesting fruits (200) such as olives, hazelnuts and the like from the relevant plants, of the type comprising a main body (2, 3; 21, 3) and a plurality of shaking elements (5; 50, 51) projecting from said main body (2, 3; 21, 3), said shaking elements (5; 50, 51) being substantially rod-shaped and rotatable about respective axes of rotation (A-A) substantially parallel therebetween by action of driving means, said accessory device (501) comprising:
- a frame support (202) bearing connecting means for making said fastening to the shaking device; and
- a grid structure integral to said support (202) and arranged, when the latter is fastened to the shaking device, circumscribed to the shaking elements (5; 50, 51) so as to define jointly with the latter a region for holding the fruit-bearing twigs and foliage.

23. The accessory device (501) according to claim 22, wherein said grid structure is arranged at a peripheral portion (201) of said support (202).

24. The accessory device (501) according to claim 21 or 22, wherein said grid structure comprises a plurality of longitudinal rod-like elements (60) substantially parallel to the axes of rotation (A-A) of the shaking elements (5; 50, 51).

25. The accessory device (501) according to the preceding claim, wherein said grid structure comprises one or more transversal elements interposed between said rod-like elements (60).

## Patentansprüche

1. Schüttelvorrichtung (1; 20) zum Ernten von Früchten (200) wie Oliven, Haselnüsse und dgl. von den betreffenden Pflanzen, mit:
- einem Hauptgehäuse (2, 3; 21, 3);
- mehreren Schüttelelementen (5; 50, 51), die von dem Hauptgehäuse (2, 3; 21, 3) vorstehen, wobei die Schüttelelemente (5; 50, 51) im Wesentlichen stabförmig sind und mit Hilfe einer Antriebseinrichtung um Drehachsen (A-A) drehbar sind, die im Wesentlichen parallel zueinander sind,
**dadurch gekennzeichnet, dass** sie weiter aufweist
- ein Gittergebilde (500), das integral mit dem Hauptgehäuse (2) ausgebildet ist und die Schüttelelemente (5; 50, 51) umgibt, um so gemeinsam mit letzteren ein Gebiet (601) zum Halten der Früchte tragenden Zweige und des Blätterwerks festzulegen.

2. Vorrichtung (1; 20) nach Anspruch 1, wobei das Gittergebilde (500) in einem peripheren Rahmen (201) des Hauptgehäuses (2) angeordnet ist.

3. Vorrichtung (1; 20) nach Anspruch 1 oder 2, wobei das Gittergebilde (500) mehrere longitudinale, stabartige Elemente (60) umfasst, die zu den Drehachsen (A-A) im Wesentlichen parallel sind.

4. Vorrichtung (1; 20) nach dem vorhergehenden Anspruch, wobei das Gittergebilde (500) ein oder mehrere transversale Elemente umfasst, die zwischen den stabartigen Elementen (60) angeordnet sind.

5. Vorrichtung (1; 20) nach einem der vorhergehenden Ansprüche, wobei jedes der Schüttelelemente (5; 50,51) seinerseits hat:
□ einen wirksamen Schüttelteil (6), der in Bezug auf die betreffende Drehachse (A-A) im Wesentlichen exzentrisch ist; und
□ einen Betätigungsteil (7), der durch die Antriebseinrichtung betätigt werden kann, in Bezug auf die betreffende Drehachse (A-A) im Wesentlichen zentriert ist und dafür ausgebildet ist, die Eindringtiefe des Schüttelelements (5) selbst zu vergrößern,
wobei die Vorrichtung (1) weiter Versteifungseinrichtungen (30, 31, 19A, 19B) aufweist, die an dem Betätigungsteil (7) jedes Schüttelelements (5) angeordnet und in der Lage sind, elastische Deformationen der Schüttelelemente (5) während deren Drehbewegung zu verhindern.

6. Vorrichtung (1; 20) nach dem vorhergehenden Anspruch, wobei die Versteifungseinrichtung für jeden Betätigungsteil (7) der Schüttelelemente (5; 50, 51) wenigstens ein Versteifungselement (30, 31) aufweist, das diesen umschließt.

7. Vorrichtung (1; 20) nach Anspruch 5 oder 6, wobei die Versteifungseinrichtung für jeden Betätigungsteil (7) der Schüttelelemente (5; 50, 51) wenigstens ein Versteifungselement (30) aufweist, das an dem Hauptgehäuse (2, 3; 21, 3) befestigt ist.

8. Vorrichtung (1; 20) nach dem vorhergehenden Anspruch, wobei das Versteifungselement eine Büchse (30) aufweist, die von dem Hauptgehäuse (2, 3; 21, 3) vorsteht

9. Vorrichtung (1; 20) nach dem vorhergehenden Anspruch, wobei die Büchse (30) im Wesentlichen zylindrisch ist.

10. Vorrichtung (1; 20) nach Anspruch 8, wobei die Büchse (30) im Wesentlichen kegelstumpfförmig ist.

11. Vorrichtung (1; 20) nach einem der Ansprüche 5 bis 10, wobei die Versteifungseinrichtung für jeden Betätigungsteil (7) der Schüttelelemente (5; 50, 51) wenigstens ein Versteifungselement (31) aufweist, das integral mit dem Betätigungsteil (7) selbst drehbar ist.

12. Vorrichtung (1; 20) nach dem vorhergehenden Anspruch und nach einem der Ansprüche 7 bis 10, wobei die Versteifungseinrichtung für jeden Betätigungsteil (7) der Schüttelelemente (5; 50, 51) wenigstens ein erstes Versteifungselement (30) aufweist, das an dem Hauptgehäuse (2, 3; 21, 3) befestigt ist, und wenigstens ein zweites Versteifungselement (31), das integral mit dem Betätigungsteil (7) selbst drehbar ist, wobei das erste Element (30) das zweite Element (31) umschließt.

13. Vorrichtung (1; 20) nach Anspruch 11 oder 12, wobei das drehbare Versteifungselement eine rohrförmige Büchse (31) aufweist, die den Betätigungsteil (7) umgibt.

14. Vorrichtung (1; 20) nach einem der Ansprüche 5 bis 13, wobei die Betätigungsteile (7) so angeordnet sind, dass sie einen Aufnahmeraum (32) für die bereits geschüttelten Zweige bilden.

15. Vorrichtung (1; 20) nach einem der Ansprüche 5 bis 14, wobei die Versteifungseinrichtung für jedes Schüttelelement (5; 50, 51) ein Paar Lager (19A, 19B) aufweist, welche jeden der Betätigungsteile (7) mit dem Hauptgehäuse (2, 3; 21, 3) drehbar verbinden und jeweils im Wesentlichen an einem Ende des Betätigungsteils (7) angeordnet sind.

16. Vorrichtung (1; 20) nach einem der vorhergehenden Ansprüche, wobei die Gesamtanordnung so getroffen ist, dass die Schüttelelemente (5) in der Lage sind, sich auf konkordante Weise zu drehen.

17. Vorrichtung (1; 20) nach einem der vorhergehenden Ansprüche, wobei die Gesamtanordnung so getroffen ist, dass die Schüttelelemente (5) in der Lage sind, sich gegenseitig auf diskordante Weise zu drehen.

18. Vorrichtung (1; 20) nach einem der vorhergehenden Ansprüche, mit einer Einrichtung zum Einstellen der Drehgeschwindigkeit der Schüttelelemente (5; 50, 51).

19. Vorrichtung (20) nach einem der vorhergehenden Ansprüche, wobei die mehreren Schüttelelemente wenigstens ein Förderelement (51) und wenigstens ein Schlagelement (50) umfassen, wobei ersteres eine Drehgeschwindigkeit hat, die niedriger ist als die von letzterem, so dass das Förderelement (51) in der Lage ist, das Früchte tragende Blätterwerk zu dem Schlagelement (50) zu fördern.

20. Vorrichtung (20) nach dem vorhergehenden Anspruch, mit mehreren Schlagelementen (50), die das wenigstens eine Förderelement (51) umgeben.

21. Vorrichtung (20) nach Anspruch 19, mit mehreren Förderelementen (51), welche das wenigstens eine Schlagelement (50) umgeben.

22. Zusatzvorrichtung (501), die dafür ausgebildet ist, an einer Schüttelvorrichtung (1; 20) zum Ernten von Früchten (200) wie Oliven, Haselnüsse und dgl. von den betreffenden Pflanzen befestigt zu werden, und die von dem Typ ist, der ein Hauptgehäuse (2, 3; 21, 3) und mehrere Schüttelelemente (5; 50, 51) umfasst, die von dem Hauptgehäuse (2, 3; 21, 3) vorstehen, wobei die Schüttelelemente (5; 50, 51) im wesentlichen stabförmig und um entsprechende Drehachsen (A-A), welche im wesentlichen parallel zueinander sind, durch die Wirkung einer Antriebseinrichtung drehbar sind, wobei die Zusatzvorrichtung (501) umfasst:
- einen Rahmenträger (202), welcher eine Verbindungseinrichtung trägt für das Festmachen an der Schüttelvorrichtung; und
- ein Gittergebilde, das integral mit dem Träger (202) gebildet und so angeordnet ist, dass, wenn letzterer an der Schüttelvorrichtung befestigt ist, es die Schüttelelemente (5; 50, 51) umschließt, um so gemeinsam mit letzteren ein Gebiet zum Halten der Frucht tragenden Zweige und des Blätterwerks festzulegen.

23. Zusatzvorrichtung (501) nach Anspruch 22, wobei das Gittergebilde in einem peripheren Teil (201) des Trägers (202) angeordnet ist.

24. Zusatzvorrichtung (501) nach Anspruch 21 oder 22, wobei das Gittergebilde mehrere longitudinale, stabartige Elemente (60) umfasst, die zu den Drehachsen (A-A) der Schüttelelemente (5; 50, 51) im Wesentlichen parallel sind.

25. Zusatzvorrichtung (501) nach dem vorhergehenden Anspruch, wobei das Gittergebilde ein oder mehrere transversale Elemente umfasst, die zwischen den stabartigen Elementen (60) angeordnet sind.

## Revendications

1. Dispositif de secouage (1; 20) pour la récolte de fruits (200) tels que des olives, des noisettes et analogue depuis les plantes appropriées, comprenant :
- un corps principal (2, 3; 21, 3) ;
- une pluralité d'éléments de secouage (5; 50, 51) se projetant depuis ledit corps principal (2, 3; 21, 3), lesdits éléments de secouage (5; 50, 51) étant sensiblement en forme de tige et pouvant tourner autour d'axes de rotation respectifs (A-A) sensiblement parallèles entre eux par l'action de moyens d'entraînement ;
**caractérisé en ce qu'**il comprend également
- une structure de grille (500) faisant partie intégrante dudit corps principal (2) et circonscrite auxdits éléments de secouage (5; 50, 51), définissant avec ces derniers une région (601) pour maintenir les rameaux et les feuillages portant des fruits.

2. Dispositif (1; 20) selon la revendication 1, dans lequel ladite structure de grille (500) est agencée sur un châssis périphérique (201) dudit corps principal (2).

3. Dispositif (1; 20) selon la revendication 1 ou 2, dans lequel ladite structure de grille (500) comprend une pluralité d'éléments longitudinaux en forme de tige (60) sensiblement parallèles auxdits axes de rotation (A-A).

4. Dispositif (1; 20) selon la revendication précédente, dans lequel ladite structure de grille (500) comprend un ou plusieurs éléments transversaux intercalés entre lesdits éléments en forme de tige (60).

5. Dispositif (1; 20) selon l'une quelconque des revendications précédentes, dans lequel chacun desdits éléments de secouage (5; 50, 51) possède lui-même :
* une partie de secouage effectif (6) sensiblement excentrée par rapport audit axe de rotation respectif (A-A) ; et
* une partie d'actionnement (7) pouvant être actionnée par les moyens d'entraînement, qui est sensiblement centrée par rapport audit axe de rotation respectif (A-A) et qui est apte à augmenter la profondeur de pénétration de l'élément de secouage (5) lui-même,
ledit dispositif (1) comprenant en outre un moyen de raidissement (30, 31, 19A, 19B) agencé dans ladite partie d'actionnement (7) de chaque élément de secouage (5) et apte à empêcher les déformations élastiques desdits éléments de secouage (5) pendant leur mouvement de rotation.

6. Dispositif (1; 20) selon la revendication précédente, dans lequel ledit moyen de raidissement comprend, pour chaque partie d'actionnement (7) desdits éléments de secouage (5; 50, 51), au moins un élément de raidissement (30, 31) circonscrit à celle-ci.

7. Dispositif (1; 20) selon la revendication 5 ou 6, dans lequel ledit moyen de raidissement comprend, pour chaque partie d'actionnement (7) desdits éléments de secouage (5; 50, 51), au moins un élément de raidissement (30) fixé audit corps principal (2, 3; 21, 3).

8. Dispositif (1; 20) selon la revendication précédente, dans lequel ledit élément de raidissement comprend un manchon (30) se projetant depuis ledit corps principal (2, 3; 21, 3).

9. Dispositif (1; 20) selon la revendication précédente, dans lequel ledit manchon (30) est sensiblement cylindrique.

10. Dispositif (1; 20) selon la revendication 8, dans lequel ledit manchon (30) est sensiblement tronconique.

11. Dispositif (1; 20) selon l'une quelconque des revendications 5 à 10, dans lequel ledit moyen de raidissement comprend, pour chaque partie d'actionnement (7) desdits éléments de secouage (5; 50, 51), au moins un élément de raidissement (31) pouvant tourner de manière intégrée par rapport à la partie d'actionnement (7) elle-même.

12. Dispositif (1; 20) selon la revendication précédente et selon l'une quelconque des revendications 7 à 10, dans lequel ledit moyen de raidissement comprend, pour chaque partie d'actionnement (7) desdits éléments de secouage (5; 50, 51), au moins un premier élément de raidissement (30) fixé audit corps principal (2, 3; 21, 3) et au moins un deuxième élément de raidissement (31) pouvant tourner de manière intégrée par rapport à la partie d'actionnement (7) elle-même, ledit premier élément (30) étant circonscrit audit deuxième élément (31).

13. Dispositif (1; 20) selon la revendication 11 ou 12, dans lequel ledit élément de raidissement rotatif comprend un manchon tubulaire (31) enveloppant la partie d'actionnement respective (7).

14. Dispositif (1; 20) selon l'une quelconque des revendications 5 à 13, dans lequel lesdites parties d'actionnement (7) sont agencées de manière à définir un logement (32) pour les branches déjà secouées.

15. Dispositif (1; 20) selon l'une quelconque des revendications 5 à 14, dans lequel ledit moyen de raidissement comprend, pour chaque élément de secouage (5; 50, 51), une paire de roulements (19A, 19B) reliant de façon rotative chacune desdites parties d'actionnement (7) audit corps principal (2, 3; 21, 3), chacun étant agencé sensiblement à une extrémité respective de ladite partie d'actionnement (7).

16. Dispositif (1; 20) selon l'une quelconque des revendications précédentes, dans lequel l'agencement global est tel que lesdits éléments de secouage (5) sont aptes à tourner dans le même sens.

17. Dispositif (1; 20) selon l'une quelconque des revendications précédentes, dans lequel l'agencement global est tel que lesdits éléments de secouage (5) sont aptes à tourner dans un sens mutuellement contraire.

18. Dispositif (1; 20) selon l'une quelconque des revendications précédentes, comprenant un moyen pour régler la vitesse de rotation desdits éléments de secouage (5; 50, 51).

19. Dispositif (20) selon l'une quelconque des revendications précédentes, dans lequel ladite pluralité d'éléments de secouage comprend au moins un élément de convoyage (51) et au moins un élément de battage (50), le premier ayant une vitesse de rotation inférieure au dernier, de sorte que ledit élément de convoyage (51) est apte à convoyer le feuillage porteur de fruits vers ledit élément de battage (50).

20. Dispositif (20) selon la revendication précédente, comprenant une pluralité d'éléments de battage (50) circonscrits audit au moins un élément de convoyage (51).

21. Dispositif (20) selon la revendication 19, comprenant une pluralité d'éléments de convoyage (51) circonscrits audit au moins un élément de battage (50).

22. Dispositif accessoire (501) apte à être fixé à un dispositif de secouage (1; 20) pour récolter des fruits (200) telles que des olives, des noisettes et analogue depuis les plantes appropriées, du type comprenant un corps principal (2, 3; 21, 3) et une pluralité d'éléments de secouage (5; 50, 51) se projetant depuis ledit corps principal (2, 3; 21, 3), lesdits éléments de secouage (5; 50, 51) étant sensiblement en forme de tige et pouvant tourner autour d'axes de rotation respectifs (A-A) sensiblement parallèles entre eux par l'action de moyens d'entraînement, ledit dispositif accessoire (501) comprenant :
- un support de châssis (202) portant un moyen de liaison pour réaliser ladite fixation audit dispositif de secouage ; et
- une structure de grille faisant partie intégrante dudit support (202) et agencée, lorsque cette dernière est fixée au dispositif de secouage, de manière à être circonscrite aux éléments de secouage (5; 50, 51) de façon à définir avec ces derniers une région pour maintenir les rameaux et les feuillages portant des fruits.

23. Dispositif accessoire (501) selon la revendication 22, dans lequel ladite structure de grille est agencée sur une partie périphérique (201) dudit support (202).

24. Dispositif accessoire (501) selon la revendication 21 ou 22, dans lequel ladite structure de grille comprend une pluralité d'éléments longitudinaux en forme de tige (60) sensiblement parallèles aux axes de rotation (A-A) des éléments de secouage (5; 50, 51).

25. Dispositif accessoire (501) selon la revendication précédente, dans lequel ladite structure de grille comprend un ou plusieurs éléments transversaux intercalés entre lesdits éléments en forme de tige (60).
